# EUROPEAN PATENT APPLICATION

(11) **EP 2 574 654 A2**
(43) Date of publication of application: **03.04.2013**
(21) Application number: 12164830.7
(22) Date of filing: 19.04.2012
(51) Int. Cl.: C09K 19/02

(54) **Blue phase liquid crystal and manufacturing method thereof**

(30) Priority: 30.09.2011 TW 100135497
(71) Applicant: Innocom Technology (Shenzhen) Co., Ltd., Shenzhen City 518109 (CN); Chimei InnoLux Corporation, Chu-Nan 350, Taipei (TW)
(72) Inventor: Chen, Hung-Shan, Chu-Nan 350 (TW); Wu, Chun-Hung, Chu-Nan 350 (TW); Lin, Yi-Hsin, Chu-Nan 350 (TW); Hsu, Hsu-Kuan, Chu-Nan 350 (TW)
(74) Representative: 2K Patentanwälte Blasberg Kewitz & Reichel

(57) **Abstract**

A manufacturing method of blue phase liquid crystal (BPLC), comprising steps of: a temperature control step which controls a temperature of a liquid crystal (LC) mixture within a range of a coexistence temperature of the blue phase and the isotropic phase; a temperature descending step which descends the temperature of the LC mixture to an operation temperature of the blue phase, wherein the operation temperature of the blue phase is higher than the phase transition temperature of the blue phase and the lower temperature phase; and a repeating step which repeats the temperature control step and the temperature descending step.

## Description

### BACKGROUND OF THE INVENTION

### Field of Invention

The invention relates to a liquid crystal a manufacturing method thereof and, in particular, to a blue phase liquid crystal (BPLC) and a manufacturing method thereof.

### Related Art

The blue phase liquid crystal (BPLC) is a self-assembly three-dimensional photonic crystal structure, and exists between the isotropic phase and the cholesteric phase. Besides, the BPLC can exist in an LC mixture containing other kind of LC, such as smectic LC or bend-shape LC (also named banana-shape LC). The BPLC is featured by a 3D crystalline characteristic, but also shows a liquid property, and besides, the lattice parameter of the BPLC is easily changeable, so that it becomes an excellent tunable photonic crystal with various optical-electronic properties.

If the BPLC is non-uniform, in which the Bragg Reflection is affected by various orientations (represented by Miller index (h, k,1)), it will become the platelet structure so that it can not be applied to the display products. Therefore, it is an important subject to provide a manufacturing method of BPLC that can make the BPLC great uniformity so as to reduce the driving voltage and eliminate the hysteresis effect, and allow the BPLC to be applied to the display products.

### SUMMARY OF THE INVENTION

Because of the temperature gradient variation and different boundary conditions during the crystal growth under the descending temperature condition, the BPLC is always formed with lack of uniformity. The uniformity here relates to the crystal size and crystal orientation (or lattice plane). Under the operation of an electric field, different crystal orientations of the BPLC will show different optical-electronic properties with the hysteresis effect. Furthermore, the excessively high driving voltage of the BPLC is also a problem for the display technology.

In view of the foregoing problem, an objective of the invention is to provide a BPLC that has great uniformity so as to reduce the driving voltage and eliminate the hysteresis effect, and the BPLC can be applied to the display products. A manufacturing method of the BPLC is also disclosed in the invention.

To achieve the above objective, the present invention discloses a manufacturing method of blue phase liquid crystal (BPLC). The method comprises steps of: a temperature control step which controls a temperature of a liquid crystal (LC) mixture to a range of coexistence temperature of the blue phase and the isotropic phase; a temperature descending step which descends the temperature of the LC mixture to an operation temperature of the blue phase, wherein the operation temperature of the blue phase is higher than the phase transition temperature of the blue phase and the lower temperature phase; and a repeating step which repeats the temperature control step and the temperature descending step.

In one embodiment, the LC mixture comprises at least a kind of LC, a monomer, and a photo initiator.

In one embodiment, the descending rate of the temperature in the temperature descending step is more than 0°C/min and not larger than 5°C/min.

In one embodiment, the manufacturing method of BPLC further comprises an initial heating step which heats the LC mixture to a range of coexistence temperature.

In one embodiment, the manufacturing method of BPLC, after the repeating step, further comprises a polymerization step which polymerizes the LC mixture.

To achieve the above objective, the present invention discloses a manufacturing method of blue phase liquid crystal (BPLC). The method comprises steps of: a temperature control step which controls a temperature of a liquid crystal (LC) mixture to a temperature of the blue phase; an electric field applying step which applies an electric field to the LC mixture; an electric field reducing step which reduces the electric field of the LC mixture; and a repeating step which repeats the electric field applying step and the electric field reducing step.

In one embodiment, the electric field reducing step completely removes the electric field.

In one embodiment, the electric field applying step applies a first electric field, and the electric field reducing step reduces the electric field to a second electric field whose intensity is smaller than the first electric field intensity.

In one embodiment, a bias of the electric field applied by the electric field applying step is larger than zero, and smaller than double of the bias which causes the double helix pillars of the blue phase to be deconstructed to the cholesteric phase.

In one embodiment, the temperature control step controls the temperature of the LC mixture to a range of coexistence temperature of the blue phase and the isotropic phase.

In one embodiment, the LC mixture includes at least a kind of LC, a monomer and a photo initiator.

In one embodiment, the electric field, the first electric field or the second electric field is formed between an upper substrate and a lower substrate, and the LC mixture is disposed between the upper substrate and the lower substrate.

In one embodiment, the manufacturing method of BPLC, after the repeating step, further comprises a polymerization step which polymerizes the LC mixture.

To achieve the above objective, the present invention discloses a blue phase liquid crystal (BPLC) which comprises an LC with a specific orientation, and an area percentage of the LC with the specific orientation is between 20% and 95% in a unit area.

In one embodiment, the specific orientation is (1 1 0), or (1 0 0), or selected from the lattice plane group of Body-Centered Cubic (BCC) Crystal Structure, or the group of Face-Centered Cubic (FCC) Crystal Structure.

To achieve the above objective, the present invention discloses a blue phase liquid crystal (BPLC) which reflects a radiation with a specific waveband, and an area percentage for reflecting the radiation with the specific waveband in a unit area is between 20% and 95%.

In one embodiment, an area percentage of a crystal size larger than 10µm in the unit area is between 20% and 95%.

As mentioned above, in the invention, two external forces (temperature and voltage) are used to destroy the crystal structure of the BPLC, and the BPLC is caused to the crystal re-growth for complying with the lowest free energy condition so as to greatly enhance the uniformity of the BPLC. In the first method, the temperature is increased and decreased by the control for improving the uniformity of the BPLC. When the temperature arrives at the coexistence temperature of the blue phase and the isotropic phase, different crystal orientation leads to different phase transition (blue phase to isotropic phase) rate, and these phase transition areas will re-grow or expand when the temperature is descended to an operation temperature of the blue phase. Finally, the crystal orientation, more compliant with the system, of the BPLC will expand and fill the whole space. In sum, the first method uses the temperature variation to destroy and re-construct the crystal of BPLC so as to improve the uniformity of the BPLC. By this method, for example, after ten-times thermal recycling, the crystal size can be enlarged to 4 or 5 times of the original size. If the thermal recycling is performed with 0.1°C/min of the descending rate of the temperature, the crystal size can achieve 60µm, and the area of a specific crystal orientation can achieve 90%. The second method utilizes the electric field to select a specific crystal orientation of the BPLC. Under the operation of the electric field, only some specific crystal orientation has no turning moment, and the other ones will be rotated, by the moment, to the orientation where no more moment exists. But, surrounded by many other crystals, the crystal can not rotate and is thus destroyed by the turning moment. Afterward, when the electric field is removed or decreased, the crystal that has been destroyed will re-grow according to the no-moment crystal orientation, which indicates the orientation of the crystal that has not been destroyed. Accordingly, the invention can make the BPLC great uniformity so as to eliminate the hysteresis effect and reduce the driving voltage.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a flow chart of a manufacturing method of blue phase liquid crystal (BPLC) according to a first embodiment of the invention;

FIG. 2 is a flow chart of a manufacturing method of blue phase liquid crystal (BPLC) according to a second embodiment of the invention; and

FIG. 3 is a schematic diagram of the electric field applying step according to the second embodiment of the invention.

### DETAILED DESCRIPTION OF THE INVENTION

The present invention will be apparent from the following detailed description, which proceeds with reference to the accompanying drawings, wherein the same references relate to the same elements.

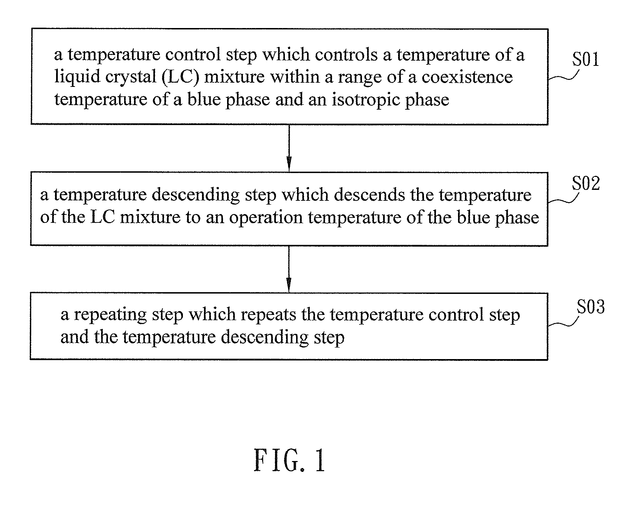

FIG. 1 is a flow chart of a manufacturing method of blue phase liquid crystal (BPLC) according to a first embodiment of the invention, comprising steps S01 to S03.

The step S01 of the manufacturing method is a temperature control step which controls a temperature of a liquid crystal (LC) mixture to a range of coexistence temperature of the blue phase and the isotropic phase. The LC mixture includes at least a kind of LC, and the LC can have chirality or non-chirality. If the LC has less chirality or no chirality, a chiral dopant can be added to the LC mixture so as to enhance the chirality of the LC. The LC mixture can further include a monomer and a photo initiator. The photo initiator can promote the photopolymerization for the monomer under the illumination condition. Thereby, the monomer of the LC mixture is polymerized, stabilizing the LC structure, and the BPLC can become Polymer-stabilized blue phase liquid crystal (PSBP-LC). The LC mixture can be disposed in a transparent container or an opaque container. The material of the container is not limited in the embodiment, and it can be made of glass for example. The temperature can be increased or decreased to make the temperature of the LC mixture within a range of coexistence temperature of the blue phase and the isotropic phase. The blue phase and the isotropic phase exist at the same time in the range of the coexistence temperature. In the embodiment, the coexistence temperature is, for example, substantially 45.6°C . The manufacturing method of BPLC can further include an initial heating step which heats the LC mixture from an ambient temperature (e.g. room temperature) to the coexistence temperature.

The step S02 of the manufacturing method is a temperature descending step which descends the temperature of the LC mixture to an operation temperature of the blue phase. The operation temperature of the blue phase is lower than the coexistence temperature, and higher than the phase transition temperature of the blue phase and a lower temperature phase than the blue phase. For example, the operation temperature of the blue phase is higher than the phase transition temperature of the blue phase and the cholesteric phase (the lower temperature phase), or higher than that of the blue phase and the sematic LC phase (the lower temperature phase). In the embodiment, the temperature of the LC mixture can be descended to 44.5°C for example, and the descending rate of the temperature can be more than 0°C/min and not larger than 5°C/min.

The step S03 of the manufacturing method is a repeating step which repeats the temperature control step (S01) and the temperature descending step (S02). In the embodiment, the temperature control step and the temperature descending step can be repeated for at least one time, respectively. The principle of the manufacturing method of BPLC of the embodiment is illustrated as below.

When the temperature descends continuously, because of the effect of the surface free energy of the container, a specific crystal orientation suitable for the growth in the system will be obviously shown. It is assumed that the red lattice plane (reflecting the red light, e.g. (1 0 0)) and the blue lattice plane (reflecting the blue light, e.g. (1 1 0)) both can be grown in the system. However, the blue lattice plane is more compliant with the free energy of the substrate, so that the crystal growth rate of the blue lattice plane is faster than that of the red lattice plane. When the crystal growth finishes (e.g. the crystal is no more expanded), the temperature will be risen. When the temperature is risen to the range of coexistence temperature of the blue phase and the isotropic phase, because the blue lattice plane is the most compliant with the free energy condition of the system, the blue lattice plane can have more complete crystal structure, but the red lattice plane undergoes serious phase transition due to the risen temperature in the meantime. Therefore, according to this principle, the crystal orientation (assumed lattice plane (1 1 0)) that is the most compliant with the free energy of the system can be sifted. Subsequently, the temperature descending step is performed again. In the meantime, because the crystal structure of the lattice plane (1 1 0) is more complete and the most compliant with the surface free energy of the substrate, the area of the lattice plane (1 1 0), expanded with the faster crystal growth rate, is larger than that of the lattice plane (1 0 0). Besides, because of the fixed amount of space for crystal growth, the crystal growth of the blue lattice plane can restrain that of the red lattice plane. Accordingly, by the thermal recycling of the embodiment, the BPLC can be manufactured and mainly composed of the crystal with a specific lattice plane.

If the BPLC includes a monomer, the manufacturing method can further includes a polymerization step to polymerize the monomer to make it become a polymer. The illumination can be applied to the monomer for the polymerization. In other embodiments, the monomer may be heated to become polymerized due to the material type thereof. The polymer that has been formed can help the stabilization of the BPLC.

By the several times of the thermal recycling of the invention, the BPLC can achieve great uniformity, and the crystal size thereof is increased a lot. For example, with a descending rate, 1°C/min, of the temperature and one-time thermal recycling, the area percentage of the blue lattice plane is 20% in a unit area. With a descending rate, 1°C/min, of the temperature and ten-times thermal recycling, the area percentage of the blue lattice plane is increased to 39% in a unit area. With a descending rate, 0.5°C/min, of the temperature and ten-times thermal recycling, the area percentage of the blue lattice plane arrives at 68% in a unit area. It has been verified that under the same descending rate of the temperature, more times of the thermal recycling can lead to greater uniformity, which means a specific lattice plane, such as blue lattice plane, has excessively large area. Besides, it also has been verified that under the same times of the thermal recycling, the less descending rate of the temperature leads to greater uniformity.

Besides, it also has been verified that under the same descending rate of the temperature, more times of the thermal recycling can lead to larger size of the crystal with the specific lattice plane. In addition, under the same times of the thermal recycling, the less descending rate of the temperature leads to the larger crystal size with the specific lattice plane. For example, with a descending rate, 1°C/min, of the temperature and one-time thermal recycling, the crystal size of the BPLC is 6µm. With a descending rate, 1°C/min, of the temperature and ten-times thermal recycling, the crystal size of the BPLC is increased to 20µm. With a descending rate, 0.5°C /min, of the temperature and ten-times thermal recycling, the crystal size of the BPLC arrives at 30µm. With a descending rate, 0.1°C/min, of the temperature and ten-times thermal recycling, the crystal size of the BPLC even arrives at 62µm.

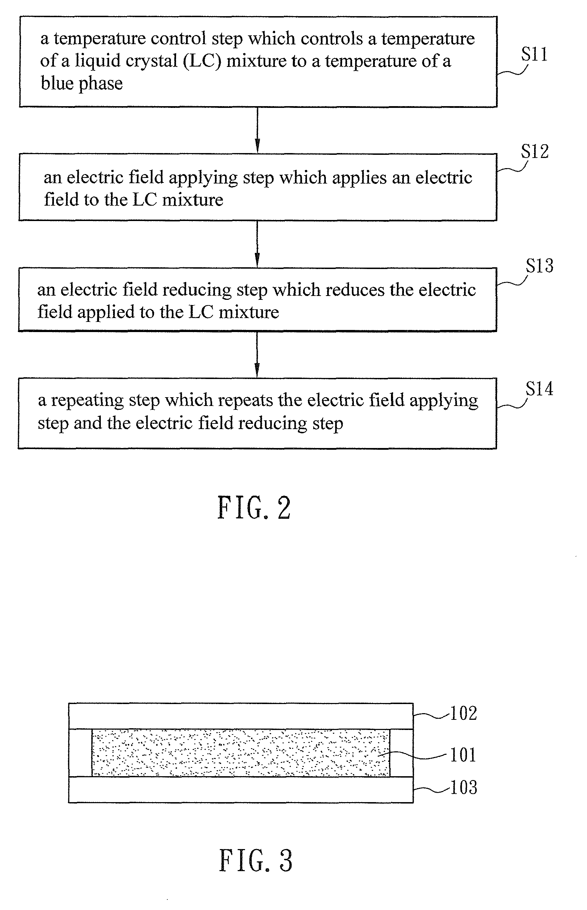

FIG. 2 is a flow chart of a manufacturing method of BPLC according to a second embodiment of the invention, comprising steps S11 to S14.

The step S11 of the manufacturing method is a temperature control step which controls a temperature of a liquid crystal (LC) mixture to a temperature of the blue phase. Because the LC mixture is illustrated clearly in the above embodiment, the detailed descriptions thereof are omitted here. In the embodiment, the temperature of the LC mixture is controlled to a range of coexistence temperature of the blue phase and the isotropic phase so as to enhance the fluidity and the crystal growth efficiency of the LC mixture.

The step S12 of the manufacturing method is an electric field applying step which applies an electric field to the LC mixture. FIG. 3 is a schematic diagram of the electric field applying step. The LC mixture 101 is disposed in a container which has an upper substrate 102 and a lower substrate 103. Two electrode layers are respectively disposed on the upper substrate 102 and the lower substrate 103, and can receive voltage signals to form the electric field. The bias of the electric field can cause the double helix pillars in the BPLC to be deconstructed to the cholesteric phase. The bias differs with different material type or electrode design of the system. If the whole deconstruction voltage is defined as Vd, the bias applied is smaller than double of the whole deconstruction voltage Vd. In the embodiment, the bias applied to the LC mixture by the electric field is 13V.

The step S13 of the manufacturing method is an electric field reducing step which reduces the electric field of the LC mixture 101. Herein, the electric field reducing step completely removes the electric field.

The step S14 of the manufacturing method is a repeating step which repeats the electric field applying step (S12) and the electric field reducing step (S13). In the embodiment, the electric field applying step and the electric field reducing step can be repeated for at least one time, respectively. The principle of the manufacturing method of BPLC of the embodiment is illustrated as below.

When the electric field is applied to the LC mixture, the LC mixture undergoes turning moment, which can be represented by τ=P×E, wherein τ means turning moment, P means polarization vector, and E means applied electric field. Different crystal orientation leads to different polarization vector P as well as turning moment, and these moments will cause the crystal to rotate to the orientation where no moment exists. Nevertheless, the electric field is applied to many crystals, and any of the crystals is fixed by the surrounding crystals, so that the crystal can not be rotated by the moment that is induced by the electric field. Finally, the crystal can not bear the moment pressure and is destroyed, and besides, the double helix pillars in the BPLC are deconstructed to become the single helix cholesteric phase, which is also called electric-field induce phase transition. When the applied electric field is removed, because the area that has been changed to the cholesteric phase is surrounded by the BPLC that is not destroyed by the moment, the cholesteric phase area re-grows the BPLC which rotates to the orientation compliant with the surrounding BPLC in order to comply with the lowest free energy condition. Accordingly, by the electric field recycling of the embodiment, the BPLC can be manufactured and mainly composed of the crystal with a specific lattice plane.

In another embodiment, the electric field applying step applies a first electric field, and the electric field reducing step reduces the electric field to a second electric field. The absolute value of the intensity of the second electric field is smaller than that of the intensity of the first electric field. When the second electric field is applied, the area that has been changed to the cholesteric phase also re-grows the BPLC which rotates to the orientation compliant with the surrounding BPLC. Besides, in other embodiment, the second electric field can be used to form a crystal with another specific lattice plane, so that the BPLC can be manufactured with two specific lattice planes.

If the BPLC includes a monomer, the manufacturing method can further includes a polymerization step to polymerize the monomer. The illumination can be applied to the monomer for the polymerization. In other embodiment, the monomer may be heated to become polymerized due to the material type thereof.

By the several times of electric field recycling of the invention, the BPLC can achieve great uniformity, and the crystal size thereof can be increased a lot. For example, with one-time electric field recycling, the area percentage of the blue lattice plane is 27% in a unit area. With 45 times of electric field recycling, the area percentage of the blue lattice plane is increased to 70% in a unit area. It has been verified that more times of the electric field recycling can lead to greater uniformity of the BPLC, which means the area with a specific lattice plane becomes excessively large. The number of times of the electric field recycling is not limited in the embodiment.

Besides, it also has been verified that more times of the electric field recycling can lead to larger size of the crystal with a specific lattice plane, and cause the crystal size of other lattice planes smaller. For example, with one-time electric field recycling, the crystal size of the red lattice plane is 8µm, and that of the blue lattice plane is 9µm. Nevertheless, with 45 times of electric field recycling, the crystal size of the red lattice plane is decreased to 5µm, and that of the blue lattice plane is increased to 17µm.

By the method of the first embodiment, the second embodiment, or their combination, the excessively uniform BPLC can be manufactured. Accordingly, the invention can manufacture a BPLC which includes an LC with a specific orientation, and an area percentage of the LC with the specific orientation is between 20% and 95 % in a unit area. In other words, an area percentage of the LC with the specific orientation is more than or equals to 20% and is less than or equals to 95% in a unit area. To be noted, before using the methods as mentioned in the above embodiments, and controlling the temperature, the LC mixture may have no BPLC. Nevertheless, by using the manufacturing methods of BPLC as mentioned in the above embodiments, the BPLC with the specific lattice plane will have a great area percentage, which even arrives at 95%.

The specific orientation can be (1 1 0), or (1 0 0) for example. Because of the great uniformity, the BPLC of the invention can reflect a radiation with a specific waveband, and an area percentage for reflecting the radiation with the specific waveband is between 20% and 95% in a unit area. In other words, an area percentage for reflecting the radiation with the specific waveband is more than or equals to 20% and is less than or equals to 95% in a unit area. The radiation can be visible light or invisible light. Besides, an area percentage of the crystal size larger than 10µm can be between 20% and 95% in the unit area. In other words, an area percentage of the crystal size larger than 10µm is more than or equals to 20% and is less than or equals to 95% in the unit area.

In summary, in the invention, two external forces (temperature and voltage) are used to destroy the crystal structure of the BPLC, and the BPLC is caused to the crystal re-growth for complying with the lowest free energy condition so as to greatly enhance the uniformity of the BPLC. In the first method, the temperature is increased and decreased by the control for improving the uniformity of the BPLC. When the temperature arrives at the coexistence temperature of the blue phase and the isotropic phase, different crystal orientation leads to different phase transition (blue phase to isotropic phase) rate, and these phase transition areas will re-grow or expand when the temperature is descended. Finally, the crystal orientation, more compliant with the system, of the BPLC will expand and fill the whole space. In sum, the first method uses the temperature variation to destroy and re-construct the crystal of BPLC so as to improve the uniformity of the BPLC. By this method, for example, after ten-times thermal recycling, the crystal size can be enlarged to 4 or 5 times of the original size. If the thermal recycling is performed with 0.1°C/min of the descending rate of the temperature, the crystal size can achieve 60µm, and the area of a specific crystal orientation can achieve 90%. The second method utilizes the electric field to select a specific crystal orientation of the BPLC. Under the operation of the electric field, only some specific crystal orientation has no turning moment, and the other ones will be rotated, by the moment, to the orientation where no more moment exists. But, surrounded by many other crystals, the crystal can not rotate and is thus destroyed by the turning moment. Afterward, when the electric field is removed or decreased, the crystal that has been destroyed will re-grow according to the no-moment crystal orientation, which indicates the orientation of the crystal that has not been destroyed. Accordingly, the invention can make the BPLC great uniformity so as to eliminate the hysteresis effect and reduce the driving voltage.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A manufacturing method of blue phase liquid crystal (BPLC), comprising steps of:
a temperature control step which controls a temperature of a liquid crystal (LC) mixture within a range of a coexistence temperature of a blue phase and an isotropic phase;
a temperature descending step which descends the temperature of the LC mixture to an operation temperature of the blue phase, wherein the operation temperature of the blue phase is higher than a phase transition temperature of the blue phase and a lower temperature phase; and
a repeating step which repeats the temperature control step and the temperature descending step.

2. The manufacturing method of BPLC as recited in claim 1, wherein the LC mixture comprises at least a kind of LC, a monomer, and a photo initiator.

3. The manufacturing method of BPLC as recited in claim 1 or 2, wherein the descending rate of the temperature in the temperature descending step is more than 0°C/min and not larger than 5°C/min.

4. The manufacturing method of BPLC as recited in any of the claims 1 to 3, further comprising:
an initial heating step which heats the LC mixture to the range of the coexistence temperature.

5. The manufacturing method of BPLC as recited in any of the claims 1 to 4, after the repeating step, further comprising:
a polymerization step which polymerizes the LC mixture.

6. A manufacturing method of blue phase liquid crystal (BPLC), comprising steps of:
a temperature control step which controls a temperature of a liquid crystal (LC) mixture to a temperature of a blue phase;
an electric field applying step which applies an electric field to the LC mixture;
an electric field reducing step which reduces the electric field applied to the LC mixture; and
a repeating step which repeats the electric field applying step and the electric field reducing step.

7. The manufacturing method of BPLC as recited in claim 6, wherein the electric field reducing step completely removes the electric field.

8. The manufacturing method of BPLC as recited in claim 6 or 7, wherein the electric field applying step applies a first electric field, and the electric field reducing step reduces the electric field to a second electric field, and the intensity of the second electric field is smaller than that of the first electric field.

9. The manufacturing method of BPLC as recited in any of the claims 6 to 8, wherein a bias of the electric field applied in the electric field applying step is larger than zero, and smaller than double of a voltage which causes double helix pillars in the BPLC to be deconstructed to a cholesteric phase.

10. The manufacturing method of BPLC as recited in any of the claims 7 to 9, wherein the temperature control step controls the temperature of the LC mixture within a range of a coexistence temperature of the blue phase and an isotropic phase.

11. The manufacturing method of BPLC as recited in any of the claims 8 to 10, wherein the temperature control step controls the temperature of the LC mixture within a range of a coexistence temperature of the blue phase and an isotropic phase.

12. The manufacturing method of BPLC as recited in any of the claims 6 to 11, wherein the LC mixture comprises at least a kind of LC, a monomer and a photo initiator.

13. The manufacturing method of BPLC as recited in any of the claims 6 to 12, wherein the electric field, the first electric field or the second electric field is formed between an upper substrate and a lower substrate, and the LC mixture is disposed between the upper substrate and the lower substrate.

14. The manufacturing method of BPLC as recited in any of the claims 7 to 13, wherein the electric field, the first electric field or the second electric field is formed between an upper substrate and a lower substrate, and the LC mixture is disposed between the upper substrate and the lower substrate.

15. The manufacturing method of BPLC as recited in any of the claims 8 to 14, wherein the electric field, the first electric field or the second electric field is formed between an upper substrate and a lower substrate, and the LC mixture is disposed between the upper substrate and the lower substrate.

16. The manufacturing method of BPLC as recited in any of the claims 6 to 15, after the repeating step, further comprising:
a polymerization step which polymerizes the LC mixture.

17. A blue phase liquid crystal (BPLC), comprising:
an LC with a specific orientation, wherein an area percentage of the LC with the specific orientation in a unit area is between 20% and 95%.

18. The BPLC as recited in claim 17, wherein the specific orientation is (1 1 0), or (1 0 0), or selected from the group of Body-Centered Cubic (BCC) Crystal Structure, or the group of Face-Centered Cubic (FCC) Crystal Structure.

19. A blue phase liquid crystal (BPLC), reflecting a light with a specific waveband, wherein an area percentage for reflecting the light with the specific waveband in a unit area is between 20% and 95%.

20. The BPLC as recited in claim 17 or 19, wherein an area percentage of a crystal size larger than 10µm in the unit area is between 20% and 95%.
